# EUROPEAN PATENT APPLICATION

(11) **EP 1 420 250 A1**
(43) Date of publication of application: **19.05.2004**
(21) Application number: 02755725.5
(22) Date of filing: 31.07.2002
(51) Int. Cl.: G01N 33/53, G01N 37/00, C12N 15/09, C12Q 1/68, C12M 1/00

(54) **GENE INSPECTION APPARATUS AND TARGET NUCLEIC ACID EXTRACTION METHOD USING THE SAME**

(30) Priority: 31.07.2001 JP 2001232501; 01.07.2002 JP 2002192510
(71) Applicant: Olympus Corporation, Tokyo 151-0072 (JP)
(72) Inventor: YONEKAWA, Hiroyuki, Tama-shi, Tokyo 206-0034 (JP); SHIBAZAKI, Takami, Akiruno-shi, Tokyo 197-0821 (JP); SATOH, Takatomo, Hino-shi, Tokyo 190-1224 (JP); SAKAMOTO, Hiroko, Shinagawa-ku, Tokyo 141-0022 (JP)
(74) Representative: von Hellfeld, Axel, Dr. Dipl.-Phys.
(86) International application number: PCT/JP2002/007809
(87) International publication number: WO 2003/027673

(57) **Abstract**

The present invention relates to a gene examining apparatus utilizing a computer, the apparatus comprising (1) DNA microarrays in each of which a large number of fine liquid accommodating sections are two-dimensionally arranged so that openings of the fine liquid accommodating sections are located on the same plane, in which each of the liquid accommodating sections can three-dimensionally accommodate a liquid, and in which hybridization reaction occurs in the liquid accommodating section between a target nucleic acid already labeled with an optical marker substance and the nucleic acid probe, and (2) a microscope comprising a stage supporting the DNA microarrays set forth in (1), a temperature regulating section that regulates the temperature of each DNA microarray, and imaging means for picking up an image of an optical signal from the DNA microarray.

## Description

### Technical Field

The present invention relates to an apparatus that detects the gene expression level and the presence or absence of mutation, and a method of detecting a target nucleic acid using this apparatus.

### Background Art

With the recent advancement of gene analysis techniques, the gene sequences of a large number of creatures including human beings have been revealed. Furthermore, the causal relationships between analyzed gene products and certain diseases have been gradually elucidated.

The current method of examining genes comprises: a step of extracting nucleic acids from a living sample; a step of amplifying a target gene to be examined using a nucleic acid amplifying method such as a PCR method or a NASBA method; a step of labeling the nucleic acid using a marker substance such as a radioisotope (hereinafter referred to as an "RI") or a fluorescent molecule; and a step of measuring the nucleotide sequence of the labeled target gene or its concentration.

Recently, many capillary electrophoresis apparatuses have been used which can quickly treat a large number of samples using a nucleic acid labeled with fluorescence and a plurality of capillaries. These apparatuses can analyze a large number of samples in a time about one-third or a quarter of the time required by methods using conventional electrophoresis apparatuses.

Furthermore, in recent years, an examining method has been developed which simultaneously examines a plurality of genes using a DNA chip. The DNA chip is manufactured by immobilizing a large number of cDNA probes on the surface of a glass substrate, or by utilizing a semiconductor manufacturing process to synthesize a large number of oligo probes in a fine area on a silicon. With either of these methods, the DNA chip can simultaneously determine the presence of plural types of target sequences contained in a sample. The use of the DNA chip has made it possible to quickly analyze the amount of expression of a large number of genes as well as a plurality of mutations. Moreover, on the basis of data obtained using the DNA chip, many genes have been classified into a plurality of groups (that is, clustering) or information on changes in genes associated with development or differentiation has been obtained. Gene information thus obtained is utilized as an easily accessible database via the Internet.

In general, an electrophoresis method or a microarray method is used to examine the amount of expression of genes and to analyze mutation. The electrophoresis method requires a long time for examinations and limits the types of examinations that can be made at one time. On the other hand, a method of analyzing a gene using a DNA chip allows a large number of examinations to be made at one time but requires a long time for examinations. Furthermore, this method as a whole, requires many examining steps and complicated procedures. Thus, disadvantageously, the results of analysis based on this method are not reproducible. To overcome these disadvantages, methods have been developed which allow results obtained to be appropriately reproduced and which are intended to quickly finish examinations that are similar to those of the method using a DNA chip. These methods include one using a porous filter as carrier for a DNA chip (PCT National Publication No. 1997-504864 and PCT Domestic Publication No. 2000-515251), and one using an electric force to force hybridization reaction (PCT Domestic Publication No. 2001-501301). These methods are disadvantageous in the use of an RI or the necessity of a membrane filter. The method of using an electric force to force hybridization reaction requires the provision of, for example, a mechanism that strictly controls the voltage in a chip. Thus, these methods cannot meet clinical demands for quick and easy examinations of genes.

For multifactor diseases such as cancer, diabetes, and hypertension which are caused by a combination of a plurality of gene defects and environmental factors, more accurate diagnoses can be made by analyzing defects in a plurality of genes in various manners and further analyzing external environmental factors. In actual chemotherapy, it is also necessary to accurately predetermine a patient's sensitivity (also construed as the patient's constitution) to an administered drug in order to avoid the side effects of the drug and to improve the results of the treatment. Moreover, when an advanced gene therapy is executed using a P53 gene or the like, it is necessary to accurately pre-analyze genetic information such as the amount of expression of a oncogene and/or a antioncogene in the patient's body, whether or not mutation is present, or the conditions of the signaling among cells.

Under these circumstances, a gene examining system is desired to be developed which can easily and quickly examine a plurality of genes.

All the cited documents and patent publications disclosed in the specification are incorporated herein by reference.

### Disclosure of Invention

It is an object of the present invention to provide a gene examining apparatus that can easily and quickly examine a plurality of genes and a method of detecting a target nucleic acid using this gene examining apparatus.

According to a first embodiment of the present invention as one aspect of it, there is provided a gene examining apparatus utilizing a computer, the apparatus comprising:
(1) DNA microarrays in each of which a large number of fine liquid accommodating sections are two-dimensionally arranged so that openings of the fine liquid accommodating sections are located on the same plane, in which each of the liquid accommodating sections can three-dimensionally accommodate a liquid, and in which hybridization reaction occurs in the liquid accommodating section between a target nucleic acid already labeled with the optical marker substance and a nucleic acid probe; and
(2) a microscope comprising a stage supporting the DNA microarrays set forth in (1), a temperature regulating section that regulates the temperature of each DNA microarray, and imaging means for picking up an image of an optical signal from the DNA microarray.

According to a further aspect of the present invention, there is provided a method of examining a gene using the apparatus set forth in the first embodiment, the method comprising;
(1) amplifying a nucleic acid extracted from a tissue or a cell obtained from a subject and adding an optical marker substance as a marker substance to afford a labeled nucleic acid;
(2) adding the labeled nucleic acid obtained in (1) to a DNA microarray comprising a desired nucleic acid probe;
(3) using the DNA microarray in (2) to cause hybridization reaction under desired conditions;
(4) measuring the intensity of an optical signal from the optical marker substance in the DNA microarray obtained in (3); and
(5) on the basis of the intensity of the optical signal obtained in (4), determining the amount of an expressed gene and/or whether or not any mutated gene is present, to obtain results of gene examinations.

### Brief Description of Drawings

FIG. 1 is a diagram showing an apparatus according to an aspect of the present invention.
FIG. 2 is a diagram showing an example of a slide chip.
FIG. 3 is a flow chart showing an example of an analysis procedure.
FIG. 4 is a flow chart showing an example of a reaction procedure.
FIG. 5 is a flow chart showing an example of an analysis procedure.
FIG. 6 is a diagram showing an example of a slide chip used to analyze mutation of a P53 Exon 7.
FIG. 7 is a diagram showing an example of a slide chip used to analyze the amount of expression.
FIG. 8 is a diagram showing an example of a reaction block.
FIG. 9 is a diagram showing a cross section taken at line 9-9 through the reaction block shown in FIG. 8.

### Best Mode for Carrying Out the Invention

### <1. Summary of the Apparatus>

According to an aspect of the present invention, an apparatus is provided which can easily detect the expression level of a gene from one subject and the presence of mutation in the gene in a short time.

Description will be given of the basic principle of a detection method implemented by the apparatus according to an embodiment of the present invention. This method uses a nucleic acid immobilized on a substrate and having a known sequence, to detect a nucleic acid strand contained in a subject and having a particular sequence. The apparatus according to the embodiment of the present invention conceptually comprises a single strand nucleic acid (that is, a nucleic acid probe) as a reagent immobilized on a substrate. In operation, the immobilized nucleic acid probe is contacted with a nucleic acid contained in a sample and labeled with an optical marker substance. If the nucleic acid contained in the sample has a sequence complementary to the nucleic acid probe, it is hybridized with the nucleic acid. Thus, a double strand is formed and the nucleic acid is captured on the substrate. Subsequently, by carrying out washing to remove an nonreacted nucleic acid strand and detecting the label of the nucleic acid, it is possible to detect the presence of a nucleic acid having a sequence complementary to the nucleic acid probe. Here, the "optical marker substance" means a fluorescent substance, a chemical light-emitting substance, a biological light-emitting substance, and any other substances that can emit light as an observable signal.

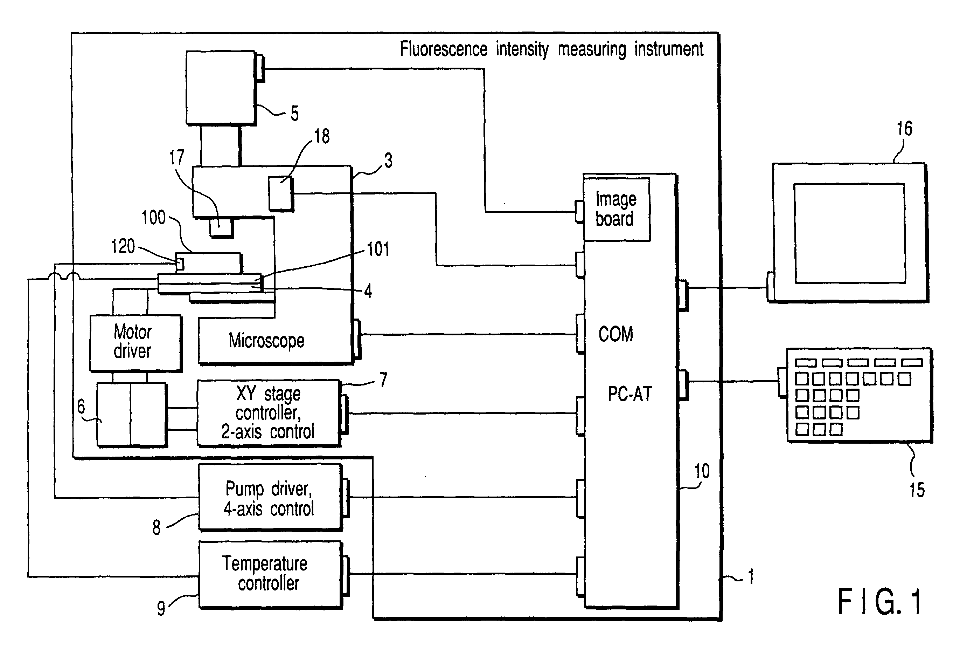

An embodiment of the apparatus of the present invention will be described with reference to the block diagram shown in FIG. 1. The apparatus according to the embodiment of the present invention is a gene examining apparatus utilizing a computer.

A gene examining apparatus 1 comprises a microscope 3 used to microscopically observe an event in DMA microarrays 22 in which a sample is caused to react, a stage 4 provided in the microscope 3 in order to support a reaction block 100 that accommodates a slide chip 2 comprising the DNA microarrays 22, imaging means 5 for picking up an image of a signal from an optical marker substance in each DNA microarray 22, the substance being observed using the microscope 3, an XY stage controller 7 that controls a motor driver 6 connected to the stage 4 in order to change the position of a visual field observed using the microscope 3, a zoom means driving device 18 that drivingly controls zoom means 17 for enlarging and/or reducing the visual field observed using the microscope 3, a pump driver 8 that transports a fluid via a joint section connected to the DNA microarrays 22, a temperature controller 9 that regulates the temperature of each DNA microarray via a heater section 101 arranged in contact with the DNA microarray 22, and a computer 10 connected directly or indirectly to all the devices included in the gene examining apparatus 1 to integrally control them.

The joint section 120 is connected to the DNA microarrays 22 in the reaction block 100 so as not to leak the fluid contained in the DNA microarrays 22 to the exterior. A terminal of the joint section 120 is connected to the pump driver via a tube. The pump driver 8 is in turn connected to a reagent holding section containing a desired reagent and the like. The pump driver 8 moves a fluid into and out of the DNA microarrays in response to instructions from the computer 10 in accordance with an analysis program.

The heater section 101 is arranged between the slide chip and the stage 4. The heater section is connected to the temperature controller 9 and has its temperature regulated by the temperature controller in accordance with instructions from the computer 10. Preferably, the heater section 101 comprises a number of heaters the number of which corresponds to the number of DNA microarrays 22 of the reaction block 100 and which can be individually controlled by the controller 9.

The computer 10 includes components provided in common computers. Although not shown in FIG. 1, the components provided in the computer 10 may include, for example, at least a CPU 11 (Central Processing Unit) that is a main control section integrally controlling each section of the computer 10, a memory 12 that stores various programs on which control by the CPU 11 is based and files for image data or the like which is to be displayed, a RAM (Random Access Memory) 13 that temporarily stores, for example, the results of execution by the CPU 11, an image processing section 14 that generates image data in accordance with instructions from the CPU 11 based on a program or the like, an input section 15 such as a keyboard and a mouse which is used by an operator, for example, a user to input information into the computer 10, and a display section 16 such as a display or a printer which displays information in accordance with instructions from the computer 10.

Information obtained by the imaging means is transmitted to the image processing section 14. The image processing section 14 processes the information in response to instructions from the CPU 11 in accordance with the analysis program stored in the memory 12. The information is thus digitized as the intensity of an optical signal emitted by an optical marker substance, for example, a fluorescence intensity.

The computer that can be used in the present invention may be any electronic computer that can be commonly used.

If for example, the optical marker substance is a fluorescent substance, the microscope that can be used in the present invention may be any fluorescent microscope that is commonly used. The microscope may be, for example, the fluorescent microscope AX-70 or BX-42TFR manufactured by Olympus. However, the present invention is not limited to these microscopes.

The imaging means that can be used in the present invention has only to be well-known means that can be used to pick up an image of a common optical signal corresponding to the type of the optical marker substance. If for example, the optical marker substance is a fluorescent substance, the imaging means is means for picking up a fluorescent image. Such imaging means includes, for example, a CCD (Charge Coupled Device) and a scanning confocal camera. However, the present invention is not limited these imaging means.

The CCD camera has only to be one commonly used. For example, it may be a common digital camera such as a MegaPlus CCD camera manufactured by Kodac or a Cool Pix camera manufactured by Photometric. The scanning confocal camera also has only to be one commonly used.

The temperature regulating section regulating the temperature of each DNA microarray 22 may include a heating element (for example, an electric heater, an electromagnetic heater, a water bath, an air bath, and Peltier element) that contacts directly or indirectly with the slide chip 2, comprising the DNA microarrays 22, to transmit heat to the slide chip 2, a sensor that sense the temperature of the slide chip 2, and a temperature controller that controls the heating of the heating element in accordance with control provided by the computer and information transmitted by the sensor.

The computer may be connected to the Integrated Services Digital Network (hereinafter referred to as the "ISDN") or to a telephone line via a modem.

The stage 4 provided in the above embodiment can be moved in an X and Y directions by the XY stage controller 7 as described above. However, changes in visual field are not limited to such movement of the stage. The visual field may be changed, for example, by the imaging means itself or using various scanning mechanisms such as means for changing an optical path joining the imaging means 5 and the microarrays 22 together.

### <2. Slide Chip and Reaction Block>

### (1) Slide Chip Comprising the DNA Microarrays

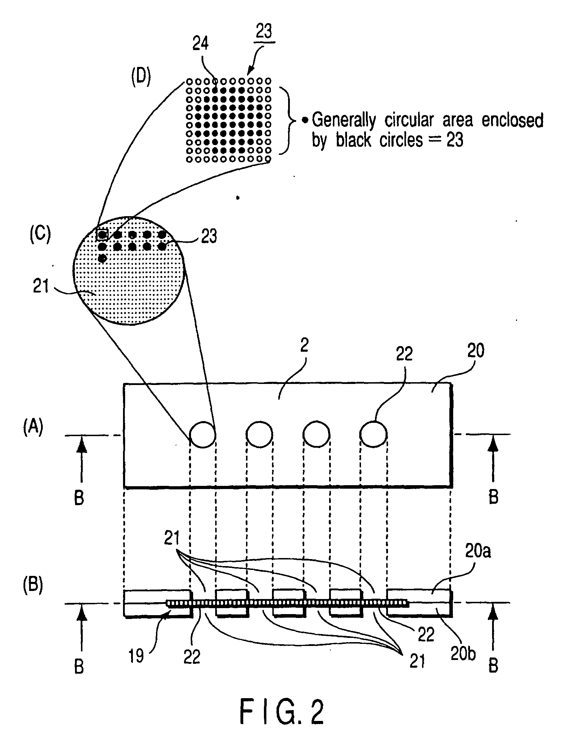

FIGS. 2(A) and 2(B) show an embodiment of the DNA microarrays 22 used in the present invention. FIG. 2(A) is a plan view of the slide chip 2. The slide chip 2 comprises four DNA microarrays 22 in which reaction occurs. FIG. 2(B) is a sectional view of the slide chip 2.

As shown in FIG. 2(B), the slide chip 2 comprises a filter 19 composed of a porous material and a support plate 20 that supports the filter 19. Channels contained in the filter 19 preferably have branches. However, the channels need not necessarily have branches. The support plate 20 is composed of two members, support plates 20a and 20b. These two members are joined together while sandwiching the filter 19 between them, to constitute the slide chip 2. As shown in FIG. 2(B), according to an embodiment of the present invention, the support plates 20a and 20b, located over and under the filter 19 have openings 21 that define the DNA microarrays 22.

As shown in FIG. 2(B), the filter 19, located between the two support plates 20a and 20b, is composed of one piece containing all the four DNA microarrays. The filter 19 is flat and extends two-dimensionally over an area including all the four DNA microarrays. The support plate 20 is preferably composed of a shielding member and more preferably of a dark black member. Preferably, the supports 20a and 20b are joined together while sandwiching the filter 19 between them.

The filter 19 may be composed of any material provided that it is not damaged within the range of temperature control carried out in the filter.

The DNA microarrays 22 refer to parts of the filter 19 that are exposed from the openings 21 formed in the support plate 20. The channels contained in the filter 19 may or may not have branches, but preferably have branches. All the channels 24 provided in the filter 19 are preferably arranged at almost equal intervals. However, all the channels 24 may be arranged at almost equal intervals at least in the microarrays 22, exposed from the support plate 20.

Provided that a filter 19 is manufactured which has a constant thickness and which comprises channels 24 the shapes of which are made as equal to one another as possible, the channels have an almost uniform volume. Alternatively, the filter 19 may be sufficiently thin and each channel 24 may have a sufficiently small diameter. Then, a required amount of sample and/or reagent can be distributed to a large number of channels. By forming channels the number of which is required to accommodate a desired amount of liquid, per particular area of one surface of the filter, and supplying a sample and/or a reagent to this predetermined area, stable analysis can be executed within the porous film of the filter 19. For example, the temperature of the liquid in the chambers can be increased or reduced by contacting one or both surfaces of the filter 19 with a gas having a controlled desired temperature. On the other hand, if analysis is executed by using a reaction container composed of one elongate tubular capillary to accommodate a predetermined amount of sample and/or reagent in the capillary, a material having as high a heat conductivity as possible can be selected to construct the capillary. To accomplish appropriate optical measurements, the capillary must be shaped to have a flat surface.

FIG. 2(C) shown immediately above the slide chip 2 in FIG. 2(A) is an enlarged view of the microarray 22 (also referred to as the "DNA microarray"). The plurality of channels 24 are present in the microarray 22. A nucleic acid probe is immobilized on the inner wall of some of the channels in the microarray 22. An area to which the nucleic acid probes are fixed is a probe spot 23 (also simply referred to as a "spot"). As shown in FIG. 2(c), each DNA microarray 22 comprises a plurality of probe spots 23.

FIG. 2(D) is an enlarged view of the probe spots and their periphery. In FIG. 2(D), for convenience, the channels 24 included in each probe spot 23 are shown by black circles. The channels 24 to which no probes are fixed are shown by white circles. The probe spot 23 is an area composed of the channels 24 comprising a plurality of probes. Normally, one probe spot 23 may be considered to be a minimum unit to which one type of probe is fixed, for the channels 24 present in parts of the filter 19 that are exposed from the support plate 20. That is, the probe has only to be immobilized on the inner wall surface of each of the channels included in the probe spot 23.

Although FIGS. 2(C) and 2(D) show generally circular areas, the contour of the probe spot 23 may be a general circle, a general rectangle, or a polygon.

The same probe may be immobilized on a plurality of probe spots 23 as desired. Alternatively, the inner wall of each channel may be subjected to surface treatment to adjust frictional resistance to a fluid or the ability of the probes to adsorb a reagent.

The size of the present slide chip is 0.5 to 20.0 cm × 0.5 to 20 cm × 0.01 to 1.0 cm, preferably 1.0 to 10.0 cm × 1.0 to 10.0 cm × 0.05 to 0.5 cm. Particularly preferably, it may be 3.0 to 8.0 cm × 3.0 to 8.0 cm × 0.05 to 0.2 cm. An example of an actually produced slide chip has a size of about 7.5 cm × about 2.5 cm × about 0.1 cm.

The present microarray is 3.0 mm² to 16 mm², preferably 12.0 to 400 mm², particularly preferably 20.0 to 100.0 mm². Circular microarrays on the actually produced slide chip have a diameter of about 6 mm (about 28.3 mm²).

The probe spot included in the present DNA microarray has a diameter of 100 to 300 µm, preferably 120 µm. Ten to thousand probe spots, preferably 400 probe spots may be provided per DNA microarray. The porous filter has only to have an openness of 0.05 to 0.5 µm, preferably 0.2 µm. Different types of nucleic acid probes may be immobilized on the respective probe spots.

The term "DNA microarray" as used herein refers to one reaction unit in which one type of reaction occurs. The DNA microarray comprises a plurality of probe spots 23 each composed of a plurality of channels 24 to which the respective nucleic probes are fixed. In a conventional DNA chip, probes are immobilized on a surface of a slide glass to form a two-dimensionally extending reaction area. In contrast to such a conventional DNA chip, the DNA microarray of the present invention has not only a two-dimensional extension over the surface of the substrate but also an extension perpendicular to the surface (that is, extending in the direction of the thickness of the substrate). The DNA microarray of the present invention thus has a three-dimensionally extended reaction area.

An example of a DNA microarray preferably used in the present invention may be the device described in PCT National Publication No. 2000-515251 or the micromachined flow-through porous apparatus described in PCT National Publication No. 1997-504864.

FIG. 2 shows the slide chip 2 comprising the four microarrays 22. However, more or less than four DNA microarrays may be provided. In the description herein, the slide chip 2 comprises the four DNA microarrays 22 as a preferable embodiment. However, the present invention is not limited to this embodiment. It is obvious to those skilled in the art that changing the number of DNA microarrays involves changes in other arrangements of the apparatus and in procedures to be executed. Such changes are included in the scope of the present invention.

If for example, a slide chip 2 comprising four DNA microarrays 22 is used, different subjects may be examined using the respective DNA microarrays. Alternatively, one chip may be used to allow one subject to undergo four types of analysis, for example, the analysis of mutation of an oncogene, expression analysis, the analysis of a drug resistant gene, and determination of the expression pattern of an intracellular signaling gene.

It is possible to appropriately change the number and arrangement density and pattern of channels included per microarray 22 as well as the size, for example, the diameter of the channel. The shape and / diameter of one channel may be varied between different areas of the microarray 22.

In the above embodiment, the filter 19 is a flat member appearing to have a two-dimensionally extending plane as well as a thickness in a direction perpendicular to the plane. However, the filter used according to the present invention is not limited to such a shape. Furthermore, the channels need not be arranged perpendicularly to the flat member.

The term "nucleic acid probe" as used herein generally refers to polynucleotide or oligonucleotide, consisting of about 10 or more to about 100 or less nucleic acids. This nucleic probe generally has only to be able to be used to detect nucleic acids by hybridization.

The probe may be any desired nucleic acid, for example, oligonucleotide corresponding to an oncogene such as P53 or c-myc, oligonucleotide corresponding to an antioncogene, oligonucleotide corresponding to a disease-related gene or a sensitive gene, or oligonucleotide corresponding to a sequence containing a polymorphous.

Besides the genes to be analyzed, use may be made of the probes for housekeeping genes such as β globlin or actin, which can be used to measure the steady state of a sample. Using the amount of such housekeeping genes as the reference amount of genes in a cell, it is allowable to measure the amount of expression of an actual oncogene, antioncogene, or drug resistant gene. This makes it possible to more accurately measure the amount of expression of genes in a cell.

The term "target nucleic acid" as used herein refers to a nucleic acid contained in a sample and which is to be detected.

According to the embodiment of the present invention, if analysis is executed using the slide chip 2 in which the above DNA microarrays 22 are arranged, the slide chip 2 contains a plurality of DNA microarrays 22. The DNA microarray 22 comprises a plurality of probe spots 23 each comprising a plurality of channels 24 each having a three-dimensional space in which a small amount of liquid can be accommodated. The channel 24 has a three-dimensional space, but all the openings, through which a fluid is moved into and out of the channels 24, are two-dimensionally arranged on the same plane. Accordingly, in a plane obtained when the slide chip 2 is viewed from above, each probe spot 23 appears to have a very small area. However, it actually comprises a three-dimensional space extending from the small-area opening.

For example, by varying conditions for each probe spot (for example, varying the type of probe fixed or varying surface treatment), very many pieces of information can be sufficiently sensitively obtained from one fine DNA microarray. Furthermore, temperature control or measurement data analysis can be executed for each DNA microarray. The results of reaction can be quickly obtained from the small apparatus for multiple items. Alternatively, temperature control or measurement data analysis can be executed for each probe spot. In this case, the results of reaction can be quickly obtained for multiple items.

In the above described embodiment of the present invention, the example is shown in which the probe is immobilized on the inner wall of each channel in the porous film. The probe need not necessarily immobilized. The present invention is also applicable to a reaction system in which a reagent is not immobilized on the inner wall of the channel in the porous film but is allowed to float freely in a liquid phase or is freely suspended in it. This system is similar to the above described embodiment except that the probe is not immobilized. In this case, the "probe spot" can be referred to as a "reaction spot". However, the "reaction spot" is included and described as an embodiment of the probe spot.

The DNA microarray 22 according to the embodiment of the present invention has the three-dimensional structure described above. Thus, even in the same visual field of the microscope, the DNA microarray 22 has a surface area about 300 to about 800 times as large as that of a conventional planar DNA chip and in a practical range, about 500 times as large. Moreover, in the DNA microarray 22 according to the embodiment of the present invention, a fluid such as a sample flows along the inner wall of a fine filter structure such as the one described above. Thus, with the DNA microarray 22, reaction rises significantly quickly compared to the conventional planar DNA chip. Detection sensitivities about 100 times higher, or about 10 to 50 times higher than that obtained with the conventional planar DNA chip are obtained in about 5 or about 15 minutes, respectively, after the start of reaction. Under these advantageous conditions, a large number of fine liquid accommodating sections that can three-dimensionally accommodate a liquid are two-dimensionally arranged so that their openings are located on the same plane. Accordingly, by using a DNA microarray to cause hybridization reaction between a target nucleic acid already labeled with an optical marker substance and the nucleic acid probe, a large number of separate reaction areas (probe spots) can be arranged within a visual field smaller than that required in the prior art. At a low magnification, the imaging means provided with the zoom means 17 as shown in FIG. 1 can preferably command an entire view of a large number of reaction areas. At a large magnification, the imaging means can preferably observe a desired limited number of reaction areas by enlarging them. The zoom means 17 preferably comprises an optical-path changing mechanism based on a galvano mirror. It is thus possible to position a visual field for image pickup so that for an area on the array which contains a large number of reaction areas within the range of the visual field at a reduced magnification, the visual field accommodates a desired number of arbitrary reaction areas at a desired magnification. Furthermore, the zoom means driving device 18 enlarges and/or reduces the imaging visual field to automatically measure specified desired reaction areas and to instantaneously display target reaction areas on the display in response to an operator's instruction.

### (2) Reaction block

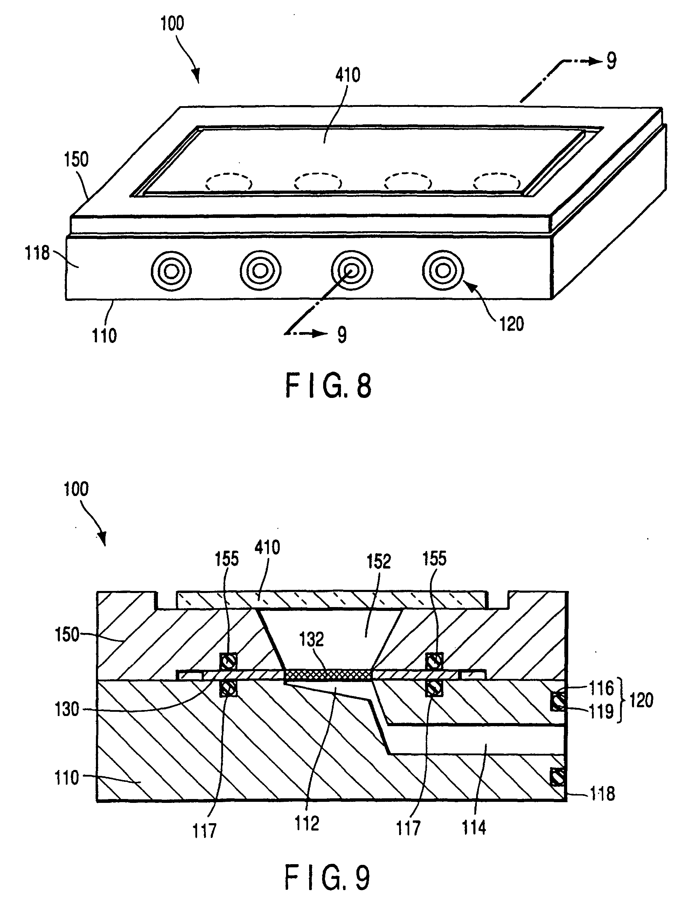

The reaction block 100 has at least one reaction liquid accommodating section, preferably, a plurality of reaction liquid accommodating sections, for example, four reaction liquid accommodating sections as shown in FIG. 8. Each of the reaction liquid accommodating sections has an upper well opened in the top surface of the reaction block 100, a lower well 112 located under the upper well 152, and a flow passage that allows the lower well 112 to communicate with an external space.

In the subsequent description, the reaction block 100 is not limited to the one described above but is assumed to have four reaction liquid accommodating sections.

The reaction block 100 further has the DNA microarray 22 arranged between the upper well 152 and the lower well 112 as a reaction section. In other words, the upper well 152 and the lower well 112 are separated from each other by the DNA microarray 22, composed of the filter 19. The DNA microarray 22 has the nucleic acid probes each immobilized on the inner wall of the porous member as described in FIG. 2.

The reaction block 100 has the upper well 152 opened in its top surface. The upper well 152 enables a reaction section 132 to be optically observed from above the reaction block 100.

To obtain the above described structure, the reaction block 100 has a base 110 and an upper plate 150 both constituting a container main body, and an alumina porous member 130 having the reaction section 132 as shown in FIG. 9. The base 110 and the upper plate 150 are made of, for example, polycarbonate and are fixed to each other via the alumina porous member 130 using an arbitrary appropriate technique such as screwing or adhesion. The material for the reaction block 100 according to the embodiment of the present invention is not limited to polycarbonate. However, any material may be used provided that it has a high pressure resistance and a high heat conduction level.

In this case, as shown in FIG. 9, packing members such as O rings 155 and 117 are preferably used for each upper well 152 and for each lower well 112, respectively, to ensure air tightness. The air tightness is preferably ensured for each well using the packing members because it is possible to avoid not only the adverse effects of an external space but also adverse effects that may be produced between the wells.

The upper plate 150 has a tapered through-hole defining the upper well 152 and a groove 154 extending from the through-hole (upper well 152) through the top surface of the upper plate 150.

The base 110 has a concave portion defining the lower well 112 and the flow passage 114 that allows the concave portion (lower well 112) to communicate with the external space. More specifically, the base 110 has a flat side 118, and the flow passage 114 extends from a bottom surface of the concave portion (lower well 112) and terminates with a joint section 120 at the side 118 of the base 110. In the side 118 (that is, a terminal surface of the flow passage), the base 110 further has an O ring 119 disposed in a ring groove 116 surrounding an opening end of the flow passage 114. In this example, four joint sections 120 are linked to separate tubes in turn connected to the pump driver 8.

The base 110 may further have one or more projections formed on the bottom surface of the concave portion (lower well 112) to suppress the deformation of the reaction in order to avoid damage to the reaction section 132, that is, its tear or breakage. The projections may be shaped like pins or plates.

As described previously, the reaction liquid accommodating section is composed of the upper well 152, the lower well 112, and the flow passage 114 as shown in FIG. 9. The sum of the volumes of the lower well 112 and flow passage 114 is larger than the volume of the upper well 152. Accordingly, the lower well 112 and the flow passage 114 can accommodate the total amount of reaction liquid initially filled into the upper well 152. The flow channel 114 has an extended portion, that is, a so-called reservoir, in order to obtain a sufficient volume.

To suppress the evaporation of the reaction liquid, the reaction block 100 preferably has a flat top surface and an observation window 410 that resists pressure and heat is placed on the top surface so that there is a small clearance above the top surface of the DNA microarray 22. The observation window 410 is arranged so as to cover the entire upper well 152 while partly covering the groove 154. Covering the entire upper well 152 minimizes the evaporation of the reaction liquid. The observation window that can be used in the embodiment of the present invention may be formed of, for example, glass, polymethylpentene, and polycarbonate.

In the embodiment of the present invention, an examination is started by the operator setting, on the stage 4, the closed reaction block 100 integrated by accommodating a sample and a reagent, reaction components, in each DNA microarray 22 and attaching the observation window 410 to the reaction block 100.

### <3. Software>

Now, description will be given of software required to allow the functioning of the above described gene examining apparatus according to the embodiment of the present invention. Furthermore, description will be given of an example in which a fluorescent substance is used as an optical marker substance according to the embodiment of the present invention. However, the present invention is not limited to this aspect.

The memory 21 provided in the computer 10, shown in FIG. 1, stores, for example, programs used to control the present apparatus via the CPU 11, information such as tables which is retrieved by the CPU 11 and used as bases for control and determinations, and image data utilized to display results obtained.

For example, an analysis program is used to carry out gene analysis and may contain commands relating to the procedure of operations required to allow the computer to execute the analysis.

For example, a reaction progress program may contain commands relating to the procedure of operations required to allow the computer to cause reaction in the DNA microarrays 22. The reaction progress program may pre-contain commands relating to a reagent selected for hybridization, the amount of reagent used, reaction conditions such as a reaction time and a reaction temperature, the number of pumping operations and the time required for the pumping, and conditions for liquid transportation and agitation at the start of the pumping. Alternatively, the reaction progress program may contain commands instructing the operator to input these pieces of information at the start of the analysis. Alternatively, these reaction conditions may be stored in the memory 12 as a reaction condition program that is different from the procedure of reaction.

The above programs are examples of programs used to control the present apparatus. However, other required programs may be stored in the memory 12.

For example, a gene correspondence table may specify the associations between fluorescence intensities obtained and reaction conditions and the amount of expression of genes, expressed genes, mutation of genes, and the like.

### <4. Operations of the Apparatus>

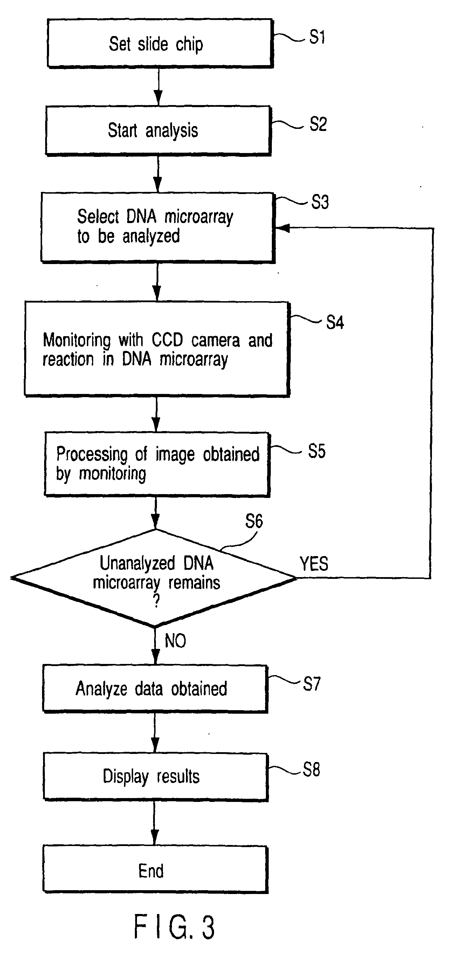

Operations of the present embodiment will be described with reference to the flow chart shown in FIG. 3. Furthermore, description will be given of an example in which a fluorescent substance is used as an optical marker substance according to the embodiment of the present invention. However, the present invention is not limited to this aspect.
(S1) The operator sets the slide chip 2 on the stage 4 so that the chip 2 contacts with the heater section, and connected the joint section to each DNA microarray 22 of the slide chip 2.
(S2) The operator inputs information to the input section 15 to instruct the present apparatus to start analysis. At this time, the operator inputs information on reaction conditions, which is then stored in the RAM 13.
(S3) When the operator gives the instruction for the start of analysis, the CPU 11 instructs the XY stage controller 7 to position one of the four DNA microarrays 22 which is unanalyzed and has a smaller recognition number so that this DNA microarray 22 is placed within the visual field of the imaging means 5. The instructed XY stage controller 7 drives the motor driver 6 to move the XY stage 4. Here, the memory 12 stores the number of DNA microarrays in the slide chip 2 used, the recognition number corresponding to each DNA microarray, the coordinates of the position of each DNA microarray, as a table indicating the correspondences between these pieces of information. Accordingly, the CPU 11 selects one of the unanalyzed DNA microarrays 22 which has the smallest recognition number and searches the table. The CPU 11 thus reads the coordinates of the target DNA microarray 22 and gives an instruction on the basis of the coordinates.
(S4) Once the target DNA microarray 22 is positioned within the visual field of the imaging means 5, the CPU 11 gives an instruction in accordance with the reaction progress program, stored in the memory 12. The CPU 11 thus controls the pump driver 8 and the temperature controller 9 to repeatedly cause reaction a number of times. In accordance with the reaction progress program stored in the memory 12, the CPU 11 gives an instruction to the imaging means 5 to pick up an image every time reaction is completed. (S4) will be described below in further detail.
(S5) Every time the imaging means 5 picks up an image in S4, the CPU 11 causes the image processing section 14 to transfer image information obtained to the RAM 13. The image information is stored in the RAM 13.
(S6) The CPU 11 reads, from the RAM 13, the recognition number of the DNA microarray selected and undergoing reaction in S3. On the basis of the recognition number, the CPU 11 determines whether or not any of the four DNA microarrays 22 provided in the slide chip 2 remains unanalyzed. If any of the DNA microarrays 22 remains unanalyzed, the procedure proceeds to (S3). Otherwise the procedure proceeds to (S7).
(S7) On the basis of the analysis program, the CPU 11 reads the image information stored in the RAM 13 to calculate the fluorescence intensity from this information. On the basis of the fluorescence intensity obtained and the reaction conditions used for obtaining this fluorescence intensity, the CPU 11 searches the gene correspondence table to read the gene information corresponding to the condition. On the basis of these pieces of information, the CPU 11 causes the image processing section 14 to create a table of the results of gene analysis, and transmits data on the calculated fluorescence intensity conditions and the gene correspondence table to the image processing section 14. The image processing section 14 then creates a table of the results and stores it in the RAM 13.
(S8) The CPU 11 instructs the image processing section 14 to display an image of the table of the results of gene analysis stored in the RAM 13. Thus, the image processing section 14 reads required information from the RAM and displays it on the display device.

In the above description, the information on the reaction conditions inputted by the operator in S2 may be, for example, the reaction temperature, the reaction time, the number of reactions, and the selected reagent. Alternatively, the information may be contained in the reaction progress program or reaction condition program pre-stored in the memory 12 rather than being inputted by the operator in S2.

In the above described example of a procedure, the DNA microarrays 22 are individually analyzed. However, all the DNA microarrays 22 may be simultaneously analyzed. Furthermore, in the above description, the DNA microarray 22 to be analyzed is automatically selected in the order of the already assigned recognition numbers. However, for each analysis, the operator may select the DNA microarray 22 to be analyzed and input an instruction on the execution of desired analysis through the input section 15.

Furthermore, by connecting the computer to the ISDN or a telephone line, the results obtained by the analysis can be compared with information obtained by searching a desired genome database or nucleotide sequence database. This procedure may be set so that on the basis of a comparison program stored in the memory 12, the CPU 11 searches a database and compares the results of the search with the results obtained by the apparatus for identification.

### <5. Reaction in the DNA Microarrays>

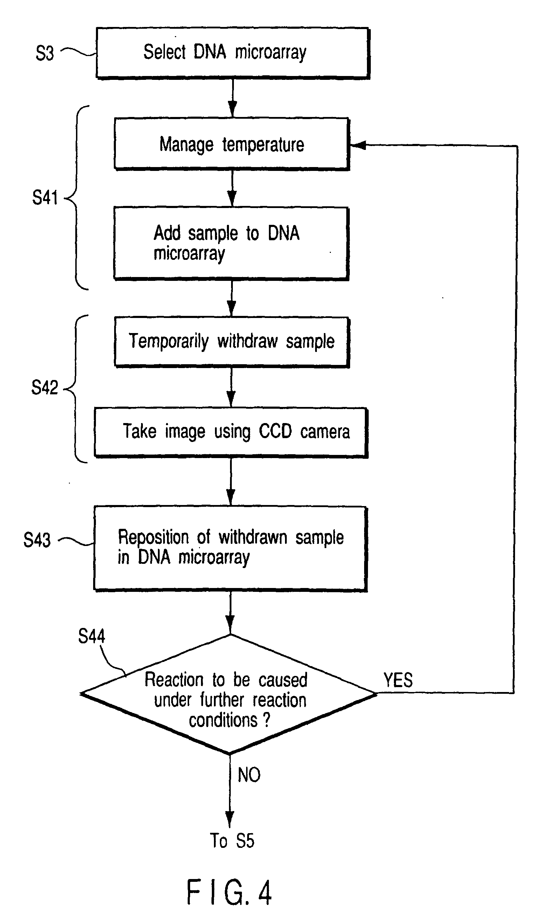

The reaction in (S4) will be further described with reference to FIG. 4.
(S41) When the target DNA microarray 22 is positioned within the visual field of the imaging means 5, the CPU 11 instructs, in accordance with the reaction progress program stored in the memory 12, the temperature controller 9 to control the heater section. The CPU 11 thus maintains the target DNA microarray 22 at a predetermined first temperature. Moreover, in accordance with the reaction progress program, the CPU 11 instructs the pump driver 8 to add the sample to the target DNA microarray 22. The CPU 11 thus causes reaction while carrying out agitation through pumping.
(S42) The reaction continues for the predetermined reaction time in accordance with the reaction progress program, stored in the memory 12. Then, in accordance with the reaction progress program, the CPU 11 instructs the pump driver 8 to temporarily withdraw the sample from the DNA microarray 22. The CPU 11 then causes the imaging means 5 to pick up an image.
(S43) After the imaging means 5 has picked up an image, the CPU 11 instructs, in accordance with the reaction progress program, the pump driver 8 to add the sample temporarily withdrawn in (S42) to the DNA microarray 22 again. At this time, an agitation operation is also performed.
(S44) The CPU 11 reads the reaction progress program and the conditions inputted by the operator and stored in the RAM 13 in (S1). The CPU 11 then determines whether or not it is necessary to cause reaction with a further temperature setting and/or under further reaction conditions such as a change in the composition of a solvent. If this is necessary, the procedure proceeds to (S41). Otherwise the procedure proceeds to (S5).

### <6. Analysis Target and Preprocess>

Example of analyses that can be executed using the apparatus of the present invention include clinical therapeutic and diagnostic analyses as well as various gene analyses even in non-clinical basic research, such as detection of mutation of an oncogene or the like in the subject, analysis of the expression of a gene in the Subject, analysis of the expression of a drug resistant gene, determination of the gene type of a disease-related or sensitivity gene in the subject, and determination of the expression pattern of an intracellular signaling gene in the subject.

In general, the sample used for gene examinations may be, in the case of human beings, blood, a cultured cell, or a living tissue such as a cell or tissue which is obtained during biopsy or an operation.

For example, a tissue section endoscopically obtained is fixed to a slide glass, stained, and pathologically examined. Then, only a part of the tissue which corresponds to the cancer focus is collected from the slide glass using the laser capture system LCS200, which is a microdissection system manufactured by Olympus. Then, this part can be used as a sample.

Before the present apparatus is used to make analysis, the living sample thus obtained is treated with a nucleic acid extracting reagent utilizing a phenol and chloroform method, a microcolumn method, or a magnetic particle method, or the like to extract a DNA and/or RNA. Moreover, the extracted DNA and/or RNA is subjected to gene amplification using a PCR method, an RT-PCR method, a T7 amplifying method, or the like. However, if the sample has a large amount of nucleic acid, a cDNA may be prepared without carrying out gene amplification. However, in any case, the composition of the reagent is preferably optimized so that a marker substance, for example, any fluorescent marker substance such as FITC, rhodamine, Cy3, or Cy5 is added to a 5' end of a primer or any site in a synthesized nucleotide.

The preparation of such a sample used for analysis may be generally carried out using a well-known method as descried in, for example, "DNA Microarray and Latest PCR Method" (separate volume of Cell Engineering; Genome Science Series 1, Shujunsha, published on March 16, 2000).

After the fluorescent labeling has been carried out, the operator may use a pipette to dispense the manually prepared sample to the DNA microarray. Subsequently, the above described apparatus may be used to execute analysis.

### <7. Analysis Method>

As described above, the inventors have completed a gene examining system as an embodiment of the present invention in which the a reaction section comprises three-dimensional DNA microarrays expected to quickly and efficiently accomplish hybridization using a filter and in which a pump for solution control, a temperature regulating system for temperature regulation, and a sensitive fluorescent detecting device are combined with an imaging device controlled by a computer. Description will be given below of an example in which fluorescence is used as an optical signal. However, the present invention is not limited to this aspect.

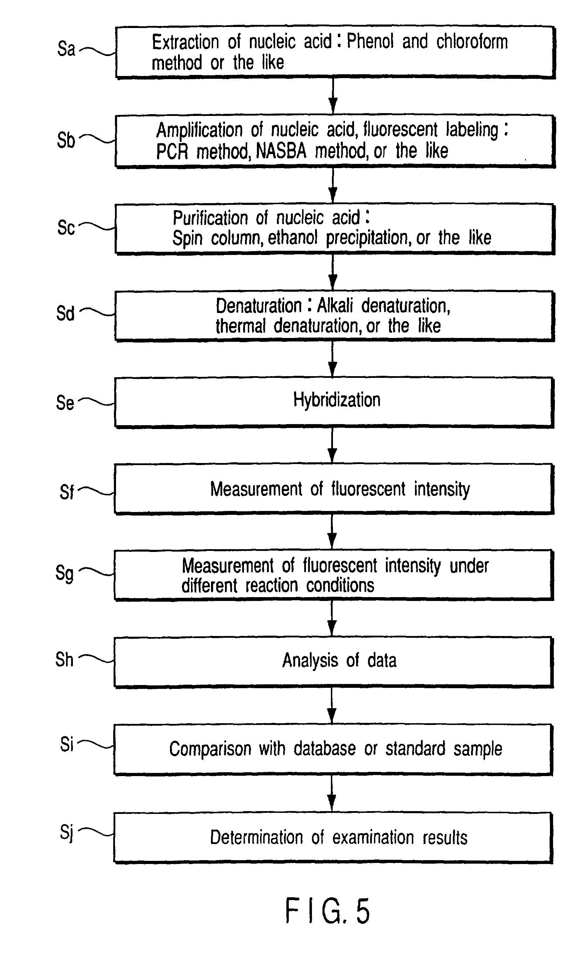

A method of analyzing a gene using such a system is included in the scope of the present invention. The method of the present invention will be described with reference to the flow chart in FIG. 5.
(Sa) First, a sample is prepared. For example, the phenol and chloroform method or the like is used to extract a nucleic acid from a tissue or cell obtained from a subject.
(Sb) The nucleic acid obtained in (Sa) is amplified using the PCR method or the NADBA method and is labeled with fluorescence. On the other hand, if the amount of the nucleic acid is large, it is only labeled with fluorescence.
(Sc) The nucleic acid labeled with fluorescence obtained in (Sb) is purified using a spin column method or an ethanol precipitation method.
(Sd) The nucleic acid obtained in (Sc) is denatured into a single strand labeled nucleic acid. Subsequently, the single strand labeled nucleic acid is added to the DNA microarray in which the nucleic acid probes are immobilized.
(Se) The DNA microarray containing the sample is subjected to hybridization under desired conditions. At this time, the liquid in the DNA microarray is preferably agitated by pumping, pipetting, or the like.
(Sf) After the hybridization has been carried out in (Se), the liquid in the DNA microarray is collected at the bottom of the array. Then, measurement is made of the fluorescence intensity of the labeled nucleic acid bonded to each nucleic probe.
(Sg) After the measurement of the fluorescence intensity has been finished in (Sf), hybridization is executed again under desired reaction conditions. Then, the fluorescence intensity is measured as described above. This procedure is repeated a required number of times under various reaction conditions.
(Sh) After reaction is finished in (Sg), the sample in the DNA microarray is recovered while remaining unchanged, that is, without being diluted or contaminated with impurities or the like. Subsequently, measurement is made of the fluorescence intensity of the labeled nucleic acid bonded to each nucleic probe.
(Si) On the basis of the fluorescence intensities obtained in (Sf) and (Sh), the amount of an expressed gene and whether or not any mutated gene is present are determined to obtain information on the target gene.
(Sj) The information on the target gene obtained in (Si) is compared with well-known gene information disclosed in a database or the results of analysis of a standard sample.
(Sk) On the basis of the results of the comparison in (Sj), determinations are made for the gene analysis of the sample from the subject.

In this example, two reactions are consecutively caused using respective sets of reaction conditions. However, it is possible to increase the number of consecutive reactions and the number of measurements of the fluorescence intensity. In this case, the steps from (Sf) to (Sg) may be repeated a required number of times.

The apparatus described above as the embodiment of the present invention is configured so that dispensation and agitation of a liquid as well as control and measurement of temperature can always be executed on a reaction element placed on the stage. Accordingly, any type of reaction system can be easily established using a small space. Therefore, the apparatus of the present invention can constitute excellent means useful in any genetic examinations.

Furthermore, according to the present invention, at least one DNA microarray is small enough to allow imaging means such as a CCD camera or a scanning confocal camera to pick up an image of the entire DNA microarray. It is thus unnecessary to optically scan the plurality of separate probe spots in the DNA microarray to be measured. This makes it possible to simultaneously and continuously monitor reaction in each spot in the same DNA microarray. This is very advantageous in simultaneously examining multiple items.

According to further aspect of the present invention, the present invention provides an apparatus that can consecutively execute a plurality of examinations on the same sample to obtain a plurality of detection results quickly or at an arbitrary time.

According to the present invention, there is provided analysis software that operates in such a measuring apparatus to analyze measurement data while checking the type of the reagent (for example, a nucleic acid probe and a nucleic acid primer) applied to each probe spot as well as each reaction condition against measurement data obtained for each reagent or for each reaction condition.

In particular, the apparatus according to the present invention can simultaneously or sequentially cause plural types of reactions in the same probe spot. Accordingly, the apparatus according to the present invention may comprise new reading means for enabling the easy establishment of reaction conditions required to cause the plural types of reactions and the accurate reading and processing of a plurality of data obtained from the plural types of reactions.

For example, such reading means may execute the following:
i) Storing, in storage means such as a memory circuit, examination item information composed of a combination of information on the positions of the probe spots to be measured in one DNA microarray and information on the control of the probe spots (for example, a temperature suitable for each reagent and the purpose of each examination),
ii) Monitoring controlled conditions actually executed in all the spots in the DNA microarray, checking the monitored actual controlled conditions against the examination item information in i), and storing the results of the check in the storage means such as a memory circuit, and
iii) Storing the results of the measurements made under the control conditions monitored in ii), in the storage means such as a memory circuit as measurement data associated with the check results obtained in ii), or
iv) associating the results of the measurements made under the control conditions monitored in ii) with the check results obtained in ii) and further using data processing means such as a CPU to execute a calculating process so as to correct the measurement results on the basis of the check results.

Accordingly, such reading means comprises storage means for storing data such as the examination item information, the monitored control conditions, and the measurement results and data, and data processing means such as a CPU which reads, compares, and checks data stored in the storage means and which executes required calculating processes.

Such new reading means and an apparatus comprising this reading means are also provided as embodiments of the present invention.

According to this reading means, for all the spots in the same visual field of the imaging means (for example, one visual field of a CCD), it is possible to store the results of reactions in the memory or the like without any mistakes, the results of reactions including the results of different types of reactions all or some of which are temporally superimposed on one another among a plurality of spots and the results of reactions occurring in at least one spot under different sets of reaction conditions. It is further possible to retrieve these results as required and output desired determination results.

In the above described embodiment, description has been given mainly of the example in which a fluorescent material is used as an optical marker substance. However, the present invention is not limited to this substance. That is, the optical marker substance used can be varied as required. Accordingly, if such a light emitting substance as described above is used, the required parts of the embodiment may be correspondingly changed. The changed embodiment is still included in the scope of the present invention.

The embodiment of the present invention has been described in detail. However, the above detailed description and drawings are intended to illustrate the embodiment and are thus not intended to limit the present invention. The present invention includes various improved or varied inventions based on various equivalents and the present obvious technical knowledge.

### [Examples]

### 1. Gene Analysis

Gene analysis is carried out using the embodiment of the present invention shown in FIGS. 1 and 2.

As a container used to measure a gene, a chip is used which contains a porous filter having a plurality of genes immobilized on its surface, the genes being complementary to a target gene to be examined. A slide chip containing this porous filter is installed on a reaction section (incubator section) placed on a stage of a fluorescent microscope. The fluorescent microscope is configured so that its excitation light shutter and fluorescent cube as well as movement of the stage can be automatically controlled by a host computer. A device such as a CCD which photographs images is installed in the fluorescent microscope. Photographing timings for the device are also controlled by the host computer. Exposure time, image saving, and a cooling state can also be controlled by the computer. Furthermore, the incubator is provided with a pump used to transport a liquid and a heater or Peltier element used to control temperature. These devices can also be controlled by the host computer.

A sample is dripped onto a measurement area of the chip. Then, the pump is used to move a reaction liquid so that the liquid moves forward and backward in channels. This accelerates the hybridization reaction. The solution leading to channels formed at the bottom of the incubator is moved. When the level of the reaction liquid reaches the top surface of the filter, the excitation light shutter is opened. Then, the imaging device such as a CCD camera or a scanning confocal camera is used to photograph a fluorescent image of the surface of the filter. The photographed image data is saved to a folder in a specified memory of the computer. A separately installed analysis program analyzes the results of measurements.

By thus arranging, around the periphery of the incubator, the pump, which facilitates hybridization, the heater, which varies the temperature of the chip, and as required, a pipetter system that varies the composition of the solution, it is possible to use the single examining system to continuously obtain patterns of hybridization at various temperatures and in various solution conditions. Furthermore, a target substance can be excited using different wavelengths corresponding to the types of fluorescent labels used for measurements so that images can be photographed at different fluorescent wavelengths. Consequently, even if a sample contains a substance labeled with a plurality of fluorescent dyes, for example, the fluorescence intensity ratio of two colors can be easily measured by automatically switching the filter cube. On the basis of the fluorescence intensities of the spots thus obtained, the amounts of the probes immobilized on the chip surface and of the hybridized target gene are analyzed. This examining apparatus can be used to sensitively detect the amount of expression of a gene such as C-myc or the like, which varies markedly with the cancerous transformation.

Furthermore, by analyzing the pattern of a variation in the fluorescence intensity of the fluorescent spot caused by a variation in the temperature of the incubator, it is possible to detect mutation of a gene such as K-Pas or P53 which significantly contributes to cancerous transformation. Thus, the same apparatus can be used to quickly analyze two pathologically important variations in a gene, which controls complicated cellular functions inside a cell, that is, the amount of expression of the gene and mutation occurring inside the gene. The method used herein to prepare a sample is similar to that used for conventional gene examinations. The results obtained by this apparatus can be easily compared with gene information stored in a database such as GenBank which is laid open on the Internet.

Using the apparatus according to the embodiment of the present invention, the level of hybridization of a target gene can be measured in real time while varying the conditions for the solution in the reaction section or varying the temperature condition.

The use of the above apparatus according to the embodiment of the present invention has enabled the level of hybridization of a target gene to be measured in real time while varying the conditions for the solution in the reaction section or varying the temperature condition. The present invention has enabled the amount of expression of a target gene to be accurately measured.

Furthermore, by automatically changing the temperature of the microarray or the composition of the solution in the reaction container after the measurement of the amount of expression, it is possible to forcedly vary the efficiency of hybridization among different probes to detect the type of mutation occurring in the target gene, for example, single nucleotide polymorphism (hereinafter referred to as "SNP"). The use of this system is expected to enable the accurate prediction of the level of progress or malignancy of cancer or the like, the possibility of metastasis, or the stage of the disease.

It is also possible to simultaneously check the amount of expression of a drug sensitive gene such as P450 which affects the sensitivity to a drug as well as SNPs, which affect activity. By thus checking defects in a causal gene for a disease and defects in a gene sensitive to a drug, it is possible to optimize the type of a drug selected and the temperature in accordance with a patient's constitution. Furthermore, on the basis of information on gene defects obtained, a gene can be accurately selected which is used for a gene therapy expected to be very effective in the future.

### 2. Measurement of the Amounts of Expression of c-myc, an Estrogen Receptor, and Telomerase

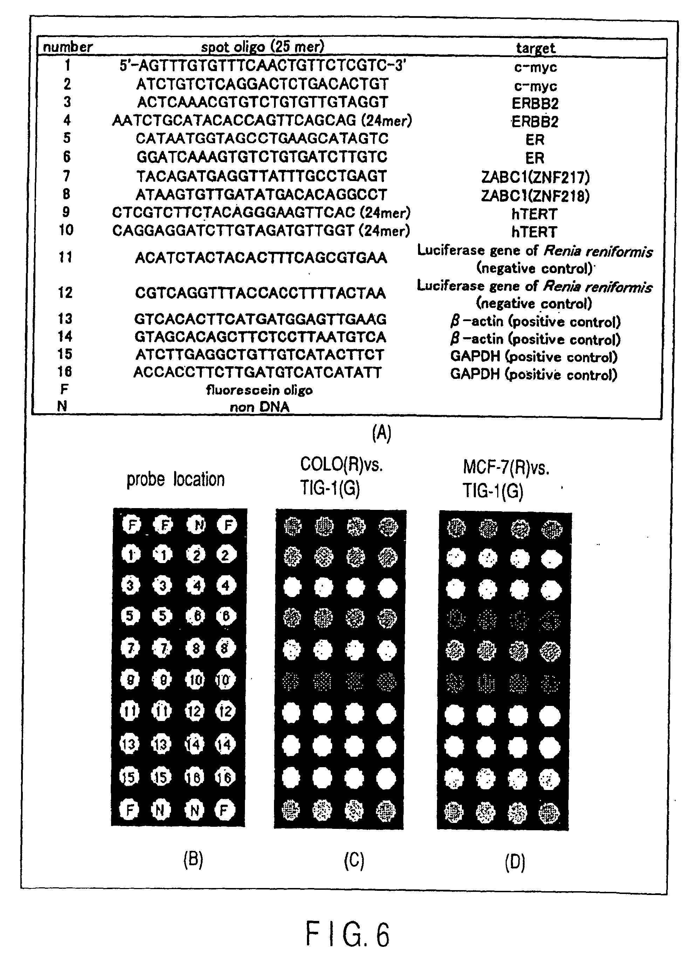

FIG. 6 shows an example of a slide chip used to measure the amounts of expression of c-myc, an estrogen receptor, and telomerase. FIG. 6(A) shows the arrangement of nucleic acid probes and housekeeping genes immobilized on respective probe spots on the slide chip. The numbers in the table are assigned to the respective probe spots. Probes and housekeeping genes for a plurality of genes including c-myc as shown in FIG. 6(A) are immobilized. FIG. 6(B) schematically shows probe spots which are provided in a DNA microarray and to which the respective numbers are assigned. A nucleic acid probe shown in association with a corresponding number in FIG. 6(A) and a housekeeping gene are immobilized to each probe spot. Each type of nucleic acid probe is immobilized to the corresponding probe spot by spotting thereof.

FIGS. 6(C) and 6(D) are diagrams schematically showing the results of hybridization and analysis of the probes fixed in accordance with the pattern shown in FIG. 6(B) as well as a subject nucleic acid, according to the embodiment of the present invention. FIG. 6(C) shows results obtained from a sample from a normal subject. FIG. 6(D) shows results obtained from a sample from an abnormal subject. By determining whether fluorescence is present on the basis of these results, it is possible to detect a gene expressed in the subject.

Optimum reaction conditions for each probe are established by using the above slide chip, varying the ambient temperature of the chip on which expression analysis has been executed as well as the composition of the solution, or setting the temperatures of the labeled nucleic acid in the sample and of the vicinity of the probe to be close to a TM (Melting Temperature). This makes it possible to analyze mutation occurring inside these genes.

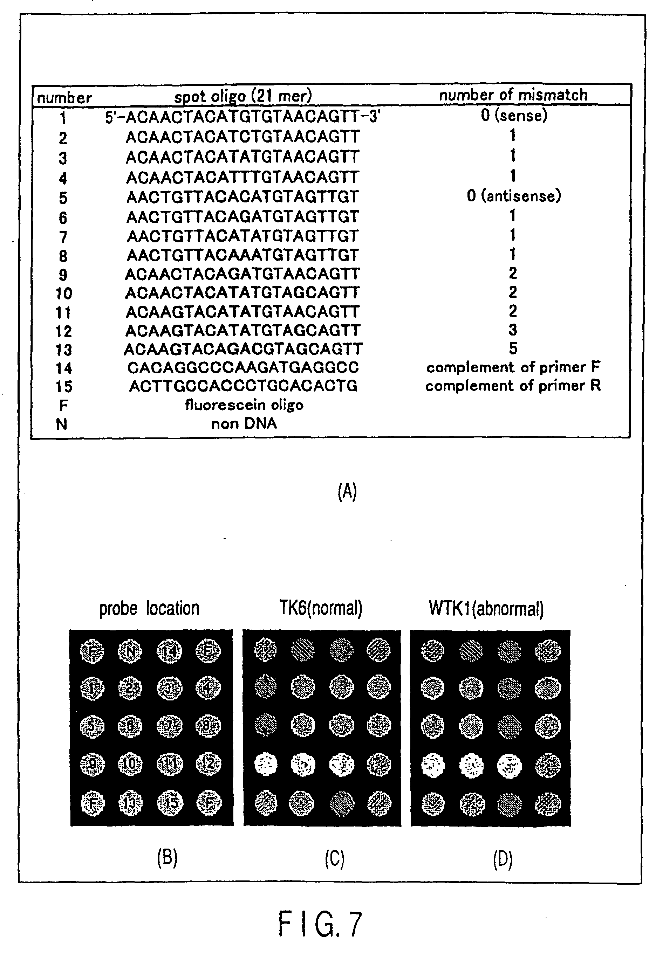

FIG. 7 shows an example in which mutation occurring inside a tumor suppressor gene P53 is detected by comparing fluorescent spot intensities with each other which result from the probes having different nucleotide sequences. FIG. 7(A) shows the arrangement of the nucleic acid probes immobilized on the respective probe spots. The numbers in the table are assigned to the respective probe spots. The probes used for analysis are a plurality of arrangements associated with the tumor suppressor gene P53 as shown in FIG. 7(A), that is, sense including sense, antisense, sense including mismatch, and antisense including mismatch. FIG. 7(B) schematically shows probe spots which are provided in a DNA microarray and to which the respective numbers are assigned. The nucleic probes shown in FIG. 7(A) are immobilized on the respective probe spots in association with their numbers. Each type of nucleic acid probe is immobilized on the corresponding probe spot by spotting. FIGS. 7(C) and 7(D) are diagrams schematically showing the results of hybridization and analysis of the probes fixed in accordance with the pattern shown in FIG. 7(B) as well as a subject nucleic acid, according to the embodiment of the present invention. FIG. 7(C) shows results obtained from a sample from a normal subject. FIG. 7(D) shows results obtained from a sample from an abnormal subject. These results indicate that the amount of expression can be detected on the basis of differences in fluorescence intensity.

The detection of a gene and the analysis of the amount of expression described above can be continuously executed on one sample in one DNA microarray.

The apparatus and method of the present invention thus enable the determination of the stage of cancerous transformation and the accurate prediction of malignancy, the likelihood of metastasis, or the differences in drug resistance among individual patients.

With the advancement of gene examining technology and computer science, for many genes, variations in the amount of expression, types of mutation, or SNPs have already been identified as genetic defects. Well-known information on these genetic defects is laid open on the Internet as a database and is thus easily available. More clinically useful and accurate determinations can be made by comparing the results of gene examinations using the apparatus and method of the present invention, with well-known information for evaluation as described above. For example, it is possible to accurately predict metastasis or determine a treatment guideline in accordance with the standards provided by National Cancer Institute (NCI). This in turn makes it possible to reduce the possibility of mis-determination resulting from the differences between in determination criteria between the nation and the facility. Important information is expected to be provided in selecting an introductory gene for genetic treatment.

Taking into account the configurations and operations of the gene examining apparatus in the above described examples and of the detection method using this apparatus, the present invention can be considered to be as described below. The supplementary notes below are provided by focusing on the point that the present invention is not limited to genetic examinations depending on applications but can be widely provided to medical fields as a technology for monitoring various other biological reactions (enzyme reaction, antigen antibody reaction, metabolic reaction, biological exercise dynamism tests, and the like) at a high throughput.
[Supplementary Note 1] A biological examining apparatus which utilizes a computer to examine different biological reactions caused in a plurality of fine reaction sections, the apparatus being characterized by comprising:
   (1) positioning means for positioning the plurality of fine reaction sections;
   (2) temperature regulating means arranged near the positioning means to regulate the temperatures of the reaction sections;
   (3) imaging means having, in the range of its visual field, two or more of the reaction sections in which different biological reactions occur;
   (4) calculating means for calculating, for each of the reaction sections, image information obtained from the same visual field by the imaging means; and
   (5) output means for checking the temperature of each reaction section against results of the calculation to output results of different biological reactions within the same visual field.
[Supplementary Note 2] The apparatus according to Supplementary Note 1, wherein the imaging means further comprises zoom means for enlarging and/or reducing an image so that an image of a desired plural number of reaction sections to be examined is displayed in the same visual field so as to have desired dimensions.
[Supplementary Note 3] The apparatus according to Supplementary Note 2, wherein the zoom means is an objective lens of a microscope (having a magnification of, for example, 10 to 1,000, preferably 40 to 400).
[Supplementary Note 4] The apparatus according to Supplementary Note 1, wherein each reaction section includes a plurality of reaction units.
[Supplementary Note 5] The apparatus according to Supplementary Note 1 or 4, wherein the plurality of reaction sections are integrally arranged in the same substrate.
[Supplementary Note 6] The apparatus according to Supplementary Note 5, wherein the substrate has a peripheral portion which surrounds the plurality of reaction sections and which can accommodate a liquid.
[Supplementary Note 7] The apparatus according to any of Supplementary Notes 1 to 6, wherein openings of the plurality of reaction sections are two-dimensionally arrange on the same plane, and the reaction sections further extend in a direction different from those of two components constituting the plane, thus forming a three-dimensional structure.

According to the embodiment of the present invention set forth in Supplementary Notes 1 to 7, the temperatures of the plurality of fine reaction sections having their positions controlled are regulated so that it is possible to simultaneously obtain an image of a plurality of reaction sections involved in two or more different biological reactions. In this case, when the imaging means picks up a plurality of images by performing temporally intermittent or continuous image pickup operations, some or all of different reaction processes can be simultaneously monitored. The zoom means sets a desired number of fine reaction sections within the same visual field to enable an image to be picked up at an optimum magnification. The calculating means processes data in real time by converting the results of reactions within the same visual field into desired output contents for each reaction section. The output means checks the results of calculations of image data from the plurality of reaction sections within the same visual field, on the basis of information on the regulated temperature. This enables the plurality of reaction sections to be sorted and arranged without any mistakes. Then, data on these reaction sections can be outputted in a form that can be easily checked by a user (for example, in print, displayed image, or transmitted data form).

According to further embodiment, the present invention can be considered to be as described below.
[Supplementary Note 8] A two-dimensional apparatus which causes biological reactions in a plurality of two-dimensionally arranged reaction sections each having an opening through which a fluid can be introduced and a passage through which a liquid can pass, the apparatus being characterized by comprising:
   temperature transmitting means having a two-dimensional acting area (forming, for example, a plane corresponding to the arrangement of the plurality of reaction sections or a cubic having such a plane); and
   a plurality of two-dimensionally arranged fluid transferring means for supplying at least one of a liquid (for example, a reaction sample, a reagent, a cleaning liquid, or a diluent) and/or a gas (for example, warm air, cool air, an inert gas, an anti-oxidizing gas, a foggy reagent, or a gas containing a sample).
[Supplementary Note 9] The apparatus according to Supplementary Note 8, wherein each of the reaction sections includes a plurality of reaction units.
[Supplementary Note 10] The apparatus according to Supplementary Note 8, further comprising control means for associating a temperature control section for the temperature transmitting means with fluid transfer control for the fluid transferring means in accordance with the type of an acting target (for example, a reaction reagent or a reagent).
[Supplementary Note 11] The apparatus according to Supplementary Note 8 or 10, wherein the plurality of reaction sections are integrally arranged in the same substrate.
[Supplementary Note 12] The apparatus according to Supplementary Note 10, wherein the control means controls temperature regulation and fluid transfer for a plurality of positions present within an acting area.
[Supplementary Note 13] The apparatus according to Supplementary Note 8, wherein the temperature transmitting means and the fluid transferring means are arranged on one side of the two-dimensionally arranged reaction sections which comprises a collection of the openings.
[Supplementary Note 14] The apparatus according to Supplementary Note 8 or 13, wherein the temperature transmitting means forms fluid transferring means composed of a plurality of tubular flow passages, in a reaction block composed of a thermally conductive member as has an acting area comprising a two-dimensional plane.

With the arrangement set forth in Supplementary Note 14, even if a fluid required for reaction (that is, a liquid and/or a gas) moves into or out of the reaction block, it moves through the flow passage, having its temperature regulated. This prevents the temperature of the DNA microarray 22 from varying inconveniently.
[Supplementary Note 15] The apparatus according to any of Supplementary Notes 8 to 14, wherein the plurality of two-dimensionally arranged reaction sections are arranged between the temperature transmitting means and additional function means {for example, imaging means, an observation window, a gripping and/or transferring arm for the reaction sections, any sensor (which, for example, senses a liquid level or a temperature), and dispensing means} for executing an additional process for the reaction sections before or after or simultaneously with a reaction process in the reaction sections.

According to the embodiment of the present invention set forth in Supplementary Notes 8 to 15, the temperature transmitting means regulates the temperatures of the plurality of reaction sections and of the fluid transferring means. Consequently, various fluids (for example, an examination sample and/or a reagent can be introduced into or conducted through each of the fine reaction sections under favorable reaction conditions. This serves to reduce the costs of temperature control and various liquid treatments, the time required for examinations, and the size of the apparatus. Furthermore, for biological reactions, it is possible to spatially efficiently arrange additional functions that are conventionally difficult to arrange simultaneously. Moreover, temperature transmission and/or fluid transfer can be executed simultaneously with the additional functions. Therefore, the single apparatus can be used to automate steps (for example, preparation of a sample, replacement of the reaction sections, dispensation, and various sensing operations and measurements) other than those for biological reactions.

The use of the apparatus according to the embodiment of the present invention provides a gene examining apparatus and method which enables a plurality of genes to be examined easily and quickly. Such an apparatus and method enables the level of hybridization of a target gene to be measured in real time while varying the conditions for the solution in the reaction sections or varying the temperature condition. Therefore, the use of this apparatus enables the accurate measurement of whether or not a target gene is expressed and the amount of expression of this gene.

## Claims

1. A gene examining apparatus utilizing a computer, the apparatus comprising:
(1) DNA microarrays in each of which a large number of fine liquid accommodating sections are two-dimensionally arranged so that openings of the fine liquid accommodating sections are located on the same plane, in which each of the liquid accommodating sections can three-dimensionally accommodate a liquid, and in which hybridization reaction occurs in the liquid accommodating section between a target nucleic acid already labeled with an optical marker substance and the nucleic acid probe; and
(2) a microscope comprising a stage supporting the DNA microarrays set forth in (1), a temperature regulating section that regulates the temperature of each DNA microarray, and imaging means for picking up an image of an optical signal from the DNA microarray.

2. The gene examining apparatus utilizing a computer according to claim 1, **characterized in that** the DNA microarray comprises a porous film having a branching channel, and the nucleic acid probe is immobilized on an inner wall of the channel in the porous film.

3. The gene examining apparatus utilizing a computer according to claim 1, further comprising:
(a) an input section which is used by an operator to input information to a computer integrally controlling the gene examining apparatus; and
(b) a display section which displays an image picked up by the imaging means.

4. The gene examining apparatus utilizing a computer according to claim 1, further comprising an image processing section which determines the intensity of an optical signal for each of the probe spots on the basis of the image picked up by the imaging means.

5. A method of examining a gene using the apparatus according to claim 1, the method comprising;
(1) amplifying a nucleic acid extracted from a tissue or a cell obtained from a subject and adding an optical marker substance as a marker substance to afford a labeled nucleic acid;
(2) adding the labeled nucleic acid obtained in (1) to a DNA microarray comprising a desired nucleic acid probe;
(3) using the DNA microarray in (2) to cause hybridization reaction under desired conditions;
(4) measuring the intensity of an optical signal from the optical marker substance in the DNA microarray obtained in (3); and
(5) on the basis of the intensity of the optical signal obtained in (4), determining the amount of an expressed gene and/or whether or not any mutated gene is present, to obtain results of gene examinations.

6. A method of examining a gene using the apparatus according to claim 1, the method comprising;
(1) amplifying a nucleic acid extracted from a tissue or a cell obtained from a subject and adding an optical marker substance as a marker substance to afford a labeled nucleic acid;
(2) adding the labeled nucleic acid obtained in (1) to a DNA microarray comprising a desired nucleic acid probe;
(3) using the DNA microarray in (2) to cause hybridization reaction under desired conditions;
(4) after the reaction in (3) has been finished, collecting a solution contained in the DNA microarray, at the bottom of the array;
(5) measuring the intensity of an optical signal from the optical marker substance in the DNA microarray obtained in (3);
(6) agitating again the liquid collected at the bottom of the array in (4);
(7) using the DNA microarray in (6) to repeat hybridization reaction under desired conditions as required;
(8) measuring the intensity of an optical signal from the DNA microarray obtained in (6); and
(9) on the basis of the intensities of the optical signals obtained in (4) and (8), determining the amount of an expressed gene and/or whether or not any mutated gene is present, to obtain results of gene examinations.

7. The method according to claim 5, further comprising comparing information obtained by determining, on the basis of the intensity of the optical signal obtained in (4), the amount of an expressed gene and/or whether or not any mutated gene is present, with well-known information disclosed in a database and/or information obtained from a standard sample, thereby obtaining the results of gene examinations.

8. The method according to claim 6, **characterized in that** operations from (5) to (8) are repeated twice or more.

9. A gene examining apparatus utilizing a computer, the apparatus comprising:
(1) DNA microarrays in each of which a large number of fine liquid accommodating sections are two-dimensionally arranged so that openings of the fine liquid accommodating sections are located on the same plane, in which each of the liquid accommodating sections can three-dimensionally accommodate a liquid, and in which hybridization reaction occurs in the liquid accommodating section between a target nucleic acid already labeled with an optical marker substance and the nucleic acid probe;
(2) a microscope comprising a stage supporting the DNA microarrays set forth in (1), a temperature regulating section that regulates the temperature of each DNA microarray, and imaging means for picking up an image of an optical signal from the DNA microarray; and
(3) fluid transporting section connected to the DNA microarray arranged on the stage of the microscope set forth in (2), to move a fluid into and out of the DNA microarray.

10. The apparatus utilizing a computer according to claim 9, **characterized in that** the DNA microarray comprises a porous film having a branching channel, and the nucleic acid probe is immobilized on an inner wall of the channel in the porous film.

11. The gene examining apparatus utilizing a computer according to claim 9, further comprising:
(a) an input section which is used by an operator to input information to a computer integrally controlling the gene examining apparatus; and
(b) a display section which displays an image picked up by the imaging means.

12. The gene examining apparatus utilizing a computer according to claim 9, further comprising an image processing section which determines the intensity of an optical signal for each of the probe spots on the basis of the image picked up by the imaging means.

13. A method of examining a gene using the apparatus according to claim 9, the method comprising;
(1) amplifying a nucleic acid extracted from a tissue or a cell obtained from a subject and adding an optical marker substance as a marker substance to afford a labeled nucleic acid;
(2) adding the labeled nucleic acid obtained in (1) to a DNA microarray comprising a desired nucleic acid probe;
(3) using the DNA microarray in (2) to cause hybridization reaction under desired conditions;
(4) measuring the intensity of an optical signal from the optical marker substance in the DNA microarray obtained in (3); and
(5) on the basis of the intensity of the optical signal obtained in (4), determining the amount of an expressed gene and/or whether or not any mutated gene is present, to obtain results of gene examinations.

14. A method of examining a gene using the apparatus according to claim 9, the method comprising;
(1) amplifying a nucleic acid extracted from a tissue or a cell obtained from a subject and adding an optical marker substance as a marker substance to afford a labeled nucleic acid;
(2) adding the labeled nucleic acid obtained in (1) to a DNA microarray comprising a desired nucleic acid probe;
(3) using the DNA microarray in (2) to cause hybridization reaction under desired conditions;
(4) after the reaction in (3) has been finished, collecting a solution contained in the DNA microarray, at the bottom of the array;
(5) measuring the intensity of an optical signal from the optical marker substance in the DNA microarray obtained in (3);
(6) agitating again the liquid collected at the bottom of the array in (4);
(7) using the DNA microarray in (6) to repeat hybridization reaction under desired conditions as required;
(8) measuring the intensity of an optical signal from the DNA microarray obtained in (3); and
(9) on the basis of the intensities of the optical signals obtained in (4) and (8), determining the amount of an expressed gene and/or whether or not any mutated gene is present, to obtain results of gene examinations.

15. The method according to claim 13, further comprising comparing information obtained by determining, on the basis of the intensity of the optical signal obtained in (4), the amount of an expressed gene and/or whether or not any mutated gene is present, with well-known information disclosed in a database and/or information obtained from a standard sample, thereby obtaining the results of gene examinations.

16. The method according to claim 14, **characterized in that** operations from (5) to (8) are repeated twice or more.

17. A gene examining apparatus utilizing a computer, the apparatus comprising:
(1) DNA microarrays in each of which a large number of fine liquid accommodating sections are two-dimensionally arranged so that openings of the fine liquid accommodating sections are located on the same plane, in which each of the liquid accommodating sections can three-dimensionally accommodate a liquid, and in which hybridization reaction occurs in the liquid accommodating section between a target nucleic acid already labeled with an optical marker substance and the nucleic acid probe;
(2) a microscope comprising a stage supporting the DNA microarrays set forth in (1), a temperature regulating section that regulates the temperature of each DNA microarray, and imaging means for picking up an image of an optical signal from the DNA microarray;
(3) fluid transporting section connected to the DNA microarray arranged on the stage of the microscope set forth in (2), to move a fluid into and out of the DNA microarray;
(4) a storage section which stores:
(a) programs indicating procedures and conditions for causing reaction in the DNA microarray in (1) while controlling all sections of the apparatus including the temperature regulating section in (2) and the liquid transporting section in (3) and then processing results obtained, and
(b) a score table indicating the type of the nucleic acid probe in (1) in association with coordinates of the nucleic acid probe in the DNA microarray;
(5) a main control section which controls the sections in (2) and (3) to operate the apparatus for the DNA microarray in (1) in accordance with a program stored in the storage section in (4), thus integrally controlling the whole apparatus;
(6) an image processing section which operates after the reaction based on the control by the main control section in (5), to process the image picked up by the imaging means set forth in (2) to determine the intensity of an optical signal for each of the probe spots, in accordance with a program contained in the storage section in (4); and
(7) an output section which searches the score table stored in the storage section in (4) to output, as determination results of gene examinations, data corresponding to the intensity of an optical signal from the coordinates determined by the image processing section in (6).

18. The apparatus utilizing a computer according to claim 17, **characterized in that** the DNA microarray comprises a porous film having a branching channel, and the nucleic acid probe is immobilized on an inner wall of the channel in the porous film.

19. A method of examining a gene using the apparatus according to claim 17, the method comprising;
(1) amplifying a nucleic acid extracted from a tissue or a cell obtained from a subject and adding an optical marker substance as a marker substance to afford a labeled nucleic acid;
(2) adding the labeled nucleic acid obtained in (1) to a DNA microarray comprising a desired nucleic acid probe;
(3) using the DNA microarray in (2) to cause hybridization reaction under desired conditions;
(4) measuring the intensity of an optical signal from the optical marker substance in the DNA microarray obtained in (3); and
(5) on the basis of the intensity of the optical signal obtained in (4), determining the amount of an expressed gene and/or whether or not any mutated gene is present, to obtain results of gene examinations.

20. A method of examining a gene using the apparatus according to claim 17, the method comprising;
(1) amplifying a nucleic acid extracted from a tissue or a cell obtained from a subject and adding an optical marker substance as a marker substance to afford a labeled nucleic acid;
(2) adding the labeled nucleic acid obtained in (1) to a DNA microarray comprising a desired nucleic acid probe;
(3) using the DNA microarray in (2) to cause hybridization reaction under desired conditions;
(4) after the reaction in (3) has been finished, collecting a solution contained in the DNA microarray, at the bottom of the array;
(5) measuring the intensity of an optical signal from the optical marker substance in the DNA microarray obtained in (3);
(6) agitating again the liquid collected at the bottom of the array in (4);
(7) using the DNA microarray in (6) to repeat hybridization reaction under desired conditions as required;
(8) measuring the intensity of an optical signal from the DNA microarray obtained in (3); and
(9) on the basis of the intensities of the optical signals obtained in (4) and (8), determining the amount of an expressed gene and/or whether or not any mutated gene is present, to obtain results of gene examinations.

21. The method according to claim 19, further comprising comparing information obtained by determining, on the basis of the intensity of the optical signal obtained in (4), the amount of an expressed gene and/or whether or not any mutated gene is present, with well-known information disclosed in a database and/or information obtained from a standard sample, thereby obtaining the results of gene examinations.

22. The method according to claim 20, **characterized in that** operations from (5) to (8) are repeated twice or more.
